**Europäisches Patentamt**

(19) **European Patent Office**

**Office européen des brevets**

(11) Veröffentlichungsnummer: **0 132 643**
**B1**

(12) # EUROPÄISCHE PATENTSCHRIFT

(45) Veröffentlichungstag der Patentschrift:
**11.05.88**

(51) Int. Cl.⁴: **G 01 K 1/08,** G 01 K 13/02,
G 01 K 7/22

(21) Anmeldenummer: **84107779.5**

(22) Anmeldetag: **04.07.84**

(54) **Temperaturmesssonde.**

(30) Priorität: **29.07.83 DE 3327389**

(43) Veröffentlichungstag der Anmeldung:
**13.02.85 Patentblatt 85/7**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 338 169**
**DE - A - 2 614 128**
**FR - A - 1 544 840**
**FR - A - 2 513 759**
**US - A - 3 434 207**
**US - A - 4 065 760**

(73) Patentinhaber: **Siemens Aktiengesellschaft Berlin und München, Wittelsbacherplatz 2, D-8000 München 2 (DE)**

(72) Erfinder: **Hübner, Erwin, Dr. rer. nat., Breitensteinstrasse 2, D-8018 Grafing (DE)**
Erfinder: **Meier, Hans, Blumenstrasse 6, D-8013 Haar (DE)**

## Beschreibung

Die Erfindung betrifft eine Temperaturmesssonde zum Messen von Übertemperaturen am Auspuff eines Verbrennungsmotors, mit einem mit Zuleitungen versehenen Heissleiter, der in einem am Auspuff anbringbaren Metallgehäuse angeordnet ist, und ein Verfahren zur Herstellung einer derartigen Temperaturmesssonde.

Aus der US-A 4 065 760 ist eine Flüssigkeitsstand- und Temperaturmesssonde bekannt, die zum Messen des Ölstandes und der Öltemperatur in einem Verbrennungsmotor oder einem anderen Ölbehälter dient. Zum Schutz des Heissleiters wird eine empfindliche Kappe verwendet, zu deren Schutz insbesondere während des Einbaus des Heissleiters eine zusätzliche Schutzhülle benötigt wird. Die den Heissleiter umgebende empfindliche Kappe besteht dabei aus Kovar und ist beidseitig noch mit Gold beschichtet.

Heissleiter sind allgemein bekannt. Unter Heissleitern versteht man temperaturabhängige Widerstände aus Halbleitermaterialien mit vergleichsweise grossem negativen Temperaturkoeffizienten. Derartige Heissleiter werden auch NTC-(Negative Temperature Coefficient-)Widerstände genannt. Während man bei elektronischen Halbleiterbauelementen vorwiegend Silizium, Germanium oder III-V-Verbindungen in einkristalliner Form als Grundmaterialien verwendet, werden Heissleiter als Einzelbauelemente praktisch ausschliesslich aus polykristalliner Oxidkeramik gefertigt. Die zu Formteilen gepressten und gesinterten Heissleiterkörper bringen gegenüber anderen Halbleitermaterialien erhebliche Vorteile mit sich. Sie bieten vor allem die Möglichkeit, spezifischen Widerstand und Temperaturkoeffizienten in weiten Grenzen mit verhältnismässig einfachen Mitteln variieren zu können. Der vorliegenden Erfindung liegt die Aufgabe zugrunde, einen Temperaturfühler in einer vakuumdichten, schock- und schüttelfesten (10 g RMS, 0 Hz bis 500 Hz) Ausführung zu schaffen, der für Temperaturen bis ungefähr 700°C geeignet ist.

Diese Aufgabe wird erfindungsgemäss durch eine Temperaturmesssonde mit den Merkmalen des Anspruchs 1 und mit einem Verfahren zur Herstellung einer solchen Temperaturmesssonde mit den Merkmalen des Anspruchs 4 gelöst.

Weitere vorteilhafte Ausgestaltungen der Erfindung sind Gegenstand zusätzlicher Ansprüche.

Die Erfindung wird anhand eines bevorzugten Ausführungsbeispiels näher erläutert.

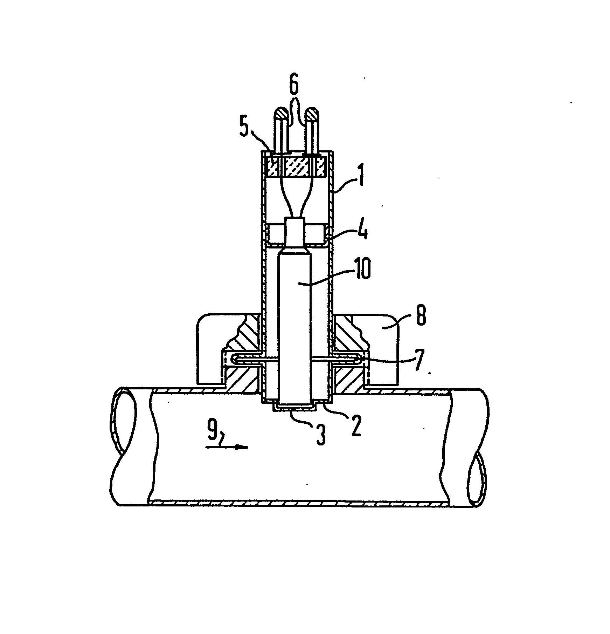

Die in der Figur schematisch im Schnitt dargestellte Temperaturmesssonde besteht im wesentlichen aus dem Messheissleiter 10. Der Messheissleiter 10 ist in einem gestauchten Rohr 1 aus einer NiFe- oder NiFeCo-haltigen Einschmelzlegierung (Vacon) montiert, wobei das Rohr 1 unten an seinem auspuffseitigen Ende mit einem eingesenkten Deckel 2 verschlossen ist. Nachdem der Heissleiter 10 in das Rohr (Hülle bzw. Hülse) 1 eingeschoben worden ist, wobei sein unteres Ende in die Vertiefung 3 des Deckels 2 einrastet, wird er von oben (seinem dem Auspuff abgewandten Ende) her mit einem schuhcremedeckelähnlichen Flansch 4, der ein zentrisches Loch aufweist, eingeklemmt, wobei dieser Flansch 4 innen an das Rohr 1 durch Punktschweissen angepunktet wird. Anschliessend wird das Rohr 1 oben mit einer Keramikscheibe 5 verlötet. Diese trägt zwei aufgelötete Röhrchen 6, die aus dem gleichen Material wie das des Rohrs 1 bestehen. Durch diese Röhrchen 6 werden die Heissleiterzuleitungen geführt. Nach einem Evakuierungs- und Belüftungsprozess werden schliesslich Zuleitungen und Röhrchen 6 miteinander verlötet. Dies geschieht z.B. mittels eines Argon-Bogen- bzw. Lotring-Flamme-Verfahrens. Dieser Verfahrensschritt ist durch die Tatsache bedingt, dass der Heissleiter 10 zwar weder mit Co bzw. $Co_2$ in Berührung kommen darf, aber etwas $O_2$ zum Nachoxidieren benötigt. Der angestauchte Metallwulst 7 erlaubt eine leichte Montage der Temperatursonde mittels einer Überwurfmutter 8 am Auspuffkrümmer der Motore. Der mit dem Bezugszeichen 9 versehene Pfeil zeigt die Richtung der Auspuffgase an.

## Patentansprüche

1. Temperaturmesssonde zum Messen von Übertemperaturen am Auspuff eines Verbrennungsmotors, mit einem mit Zuleitungen versehenen Heissleiter, der in einem am Auspuff anbringbaren Metallgehäuse angeordnet ist, dadurch gekennzeichnet, dass das Metallgehäuse aus einem gasdicht verschlossenen Rohr (1) besteht, das in seinem dem Auspuff zugewandten Bereich mit einem eingesenkten Deckel (2) und in seinem dem Auspuff abgewandten Bereich mit einer Keramikscheibe (5) verschlossen ist, durch die die Zuleitungen zum Heissleiter (10) geführt sind, der mit seinem dem Auspuff zugewandten Ende in die Vertiefung (3) des Deckels (2) eingefügt und mit seinem dem Auspuff abgewandten Ende in einen im Rohr (1) befestigten Flansch (4), der ein zentrales Loch aufweist, eingeklemmt ist.

2. Temperaturmesssonde nach Anspruch 1, dadurch gekennzeichnet, dass das gasdicht verschlossene Rohr (1) aus einer NiFe- oder NiFeCo-haltigen Einschmelzlegierung besteht.

3. Temperaturmesssonde nach Anspruch 1 oder 2, dadurch gekennzeichnet, dass das gasdicht verschlossene Rohr (1) gestaucht ist.

4. Verfahren zum Herstellen einer Temperaturmesssonde zum Messen von Übertemperaturen am Auspuff eines Verbrennungsmotors, mit einem mit Zuleitungen versehenen Heissleiter, der in einem am Auspuff anbringbaren Metallgehäuse angeordnet ist nach einem der Ansprüche 1 bis 3, dadurch gekennzeichnet, dass der Heissleiter (10) in ein gestauchtes Rohr (1) aus einer NiFe-haltigen Einschmelzlegierung montiert wird, das an seinem dem Auspuff zugewandten Ende mit einem eingesenkten Deckel (2) verschlossen ist, wobei das dem Auspuff zugewandte Ende des Heissleiters (10) in die Vertiefung (3) des Deckels (2) geschoben wird, und der Heissleiter (10) in die Vertiefung (3) des Deckels (2) geschoben wird, und der Heissleiter (10) von seinem dem Auspuff abgewandten Ende her mit einem Flansch (4), der ein zentrisches Loch aufweist, eingeklemmt wird, der innen am Rohr (1) befestigt wird, dass das Rohr (1) mit einer Keramikscheibe (5) verlötet wird, die die Heissleiterzuleitungen trägt und dass nach einem Evakuierungs- und Belüftungsprozess das Metallgehäuse verlötet wird.

**Claims**

1. Temperature measuring probe for measuring excess temperatures at the exhaust of an internal combustion engine using a thermistor provided with leads which is disposed in a metal housing mountable on the exhaust, characterized in that the metal housing consists of a gastight sealed tube (1) which is sealed in its region facing the exhaust with a recessed cover (2) and in its region facing away from the exhaust with a ceramic disc (5) through which the leads to the thermistor (10) are passed, which thermistor is inserted by means of its end facing the exhaust into the recess (3) of the cover (2) and is clamped by means of its end facing away from the exhaust into a flange (4), fitted in the tube (1), which has a central hole.

2. Temperature measuring probe as claimed in claim 1, characterized in that the gastight sealed tube (1) consists of an NiFe- or NiFeCo-containing sealing alloy.

3. Temperature measuring probe as claimed in claim 1 or 2, characterized in that the gastight sealed tube (1) is upset.

4. Method for producing a temperature measuring probe for measuring excess temperatures at the exhaust of an internal combustion engine using a thermistor provided with leads which is disposed in a metal housing mountable on the exhaust according to one of the claims 1 to 3, characterized in that the thermistor (10) is mounted in an upset tube (1) composed of an NiFe-containing sealing alloy, which tube is sealed at its end facing the exhaust with a recessed cover (2), the end of the thermistor (10) facing the exhaust being inserted in the recess (3) of the cover (2), and the thermistor (10) being clamped from its end facing away from the exhaust with a flange (4) which has a centric hole, which flange is attached internally to the tube (1), in that the tube (17 is brazed to a ceramic disc (5) which supports the thermistor leads and in that, after an evacuation and ventilation process, the metal housing is brazed.

**Revendications**

1. Sonde de mesure de températures pour mesurer des élévations de températures sur l'échappement d'un moteur à combustion interne, comprenant une thermistance munie de connexions, qui est logée dans un boîtier métallique pouvant être monté sur l'échappement, caractérisée en ce que le boîtier métallique est formé d'un tube (1) fermé étanche aux gaz, qui est fermé dans sa partie dirigée vers l'échappement par un couvercle (2) encastré et dans sa partie éloignée de l'échappement par un disque de céramique (5), à travers lequel passent les connexions de la thermistance (10), la thermistance étant disposée dans un creux (3) du couvercle (2) par son extrémité dirigée vers l'échappement et étant fixée par son extrémité éloignée de l'échappement dans un disque (4) pourvu d'un trou central et fixé dans le tube (1).

2. Sonde selon la revendication 1, caractérisée en ce que le tube (1), fermé étanche au gaz, est formé d'un alliage de scellement par fusion contenant du NiFe ou NiFeCo.

3. Sonde selon la revendication 1 ou 2, caractérisée en ce que le tube (1), fermé étanche aux gaz, est refoulé.

4. Procédé pour fabriquer une sonde de mesure de températures, pour mesurer des élévations de température sur l'échappement d'un moteur à combustion interne, comprenant une thermistance munie de connexions, qui est logée dans un boîter métallique pouvant être monté sur l'échappement, selon une des revendications 1 à 3, caractérisé en ce que l'on monte la thermistance (10) dans un tube refoulé (1) en alliage de scellement par fusion, contenant du NiFe, on ferme l'extrémité de ce tube dirigée vers l'échappement par un couvercle (2) encastré, en faisant pénétrer l'extrémité de la thermistance (10) dirigée vers l'échappement dans un creux (3) du couvercle (2), on fixe la thermistance (10) par son extrémité éloignée de l'échappement à l'aide d'un disque (4) pourvu d'un trou central et que l'on fixe intérieurement au tube (1), on soude dans l'extrémité du tube (1) éloigné de l'échappement un disque de céramique (5) qui porte les connexions de la thermistance et, à la suite d'un processus d'évacuation et d'aération, on ferme la boîter métallique par soudage.